# EUROPEAN PATENT SPECIFICATION

(11) **EP 3 409 351 B1**
(45) Date of publication and mention of the grant of the patent: **12.08.2020**
(21) Application number: 17744211.8
(22) Date of filing: 24.01.2017
(51) Int. Cl.: B01J 19/08, H05H 1/24, B01J 8/42, B01J 19/24, B01J 8/00

(54) **POWDER-TREATING DEVICE AND METHOD**
VORRICHTUNG UND VERFAHREN ZUR PULVERBEHANDLUNG
DISPOSITIF ET PROCÉDÉ DE TRAITEMENT DE POUDRE

(30) Priority: 25.01.2016 JP 2016011704
(43) Date of publication of application: 05.12.2018
(73) Proprietor: Nippon Pneumatic MFG. Co., Ltd., Osaka-shi, Osaka 537-0003 (JP)
(72) Inventor: HIROSE, Fumihiko, Yonezawa-shi Yamagata 992-0031 (JP); MORIMOTO, Hiroshi, Nabari-shi Mie 518-0605 (JP)
(74) Representative: DTS Zürich
(86) International application number: PCT/JP2017/002389
(87) International publication number: WO 2017/130981

(56) References cited:
- WO-A1-03/086030
- WO-A1-2005/039753
- WO-A1-2008/014607
- JP-A- H0 665 739
- JP-A- S5 932 940
- JP-A- 2008 152 924
- US-A1- 2003 157 000

## Description

### CROSS-REFERENCE TO RELATED APPLICATION

This application claims priority to Japanese Patent Application No. 2016-11704.

### FIELD OF THE INVENTION

The present invention relates to an apparatus and method for powder treatment for surface treatment of fine particles.

### BACKGROUND ART

Hydrophilized powder materials are used for making powder highly functional, which is generated during recycling of plastics. For example, Non-Patent Literature 1 discloses that oil can be removed from waste water or emulsion, in which oil and water are mixed by fiber reinforced plastics produced from waste material, which is powdered and whose surface is hydrophilized. This is a case where functional fine particles are made to disperse in water to thereby enable water purification and substance recovery. As an example of utilization of hydrophilized powder, Non-Patent Literature 2 shows an example where nanosilica powder is hydrophilized in advance to be served as an exterior wall material so that a surface of the exterior wall material is made hydrophilic, which makes the wall material hard to be stained. Hydrophilization treatment of powder is widely employed in a manufacturing process of cosmetics, painting material, and printing ink as an application where powder is made to disperse in aqueous solvent to be used as paste.

As a method for hydrophilization of powder employed in the above-mentioned application, a powder surface is treated with plasma or the like, or exposed to oxidation gas such as ozone so that the surface is hydroxylated. However, when the powder surface is hydroxylated, it causes problems that powders are bonded to each other to cause aggregation and firmly adhered to a storage container. It is assumed that this phenomenon may result from the hydroxylated surfaces that form hydrogen bonding at a contact interface between fine particles. In the field of the powder processing, pulverization and classification are performed for uniforming powder size in a desired range. Here, when the hydrophilized powder is subjected to a jet mill, it causes unfavorable phenomena such as enlargement of particles and brecciation as a result of the firm adhesion. In order to avoid these problems, powder is immersed once in silane coupling agent when fine particles are stored, pulverized, and classified, so that a hydroxyl group on the surface is terminated with hydrocarbon to thereby allow the surface to be hydrophobized. Then, the powder is hydrophilized immediately before it is made to disperse in aqueous solvent.

Conventionally, as a method for hydrophilization of the surface of fine particles, it has been proposed to expose fine particles themselves to plasma gas. For example, Patent Literature 1 shows a method, in which powder is stored in a rotating drum, electrodes are arranged at a trunk and a shaft of the drum, to which a high frequency electric field is applied, to thereby cause an electric discharge, and the powder is exposed to plasma gas, while being rotated and stirred in the drum. In this method, for exposing the powder to plasma gas, it is necessary to set the powder in the container in advance and take out the same after the treatment. It was thus difficult, for example, to successively introduce the powder and take out the powder after the treatment without interval. In the field of the powder treatment, there is a demand for providing a classification function to take out only the powder having the same particle size; however, the apparatus shown above needs to separately prepare a classification device after the surface treatment. In the plasma treatment, there was a demand for the treatment in the atmospheric pressure in handling the powder, because there may be an accident where the powder is sucked into the vacuum pump due to the fineness of the powder when a vacuum device is used. In a case where an electric discharge is caused by the high frequency electric field using electrodes for producing plasma, plasma under the atmospheric pressure converges around the electrodes, and it was difficult to produce plasma uniformly within the container, in which the powder is to be stored, for example, in a drum type disclosed in Patent Literature 1. Accordingly, the powder was treated by configuring the inside of the drum to have a lower pressure of 100 Pa or lower, while using the plasma chemistry, that is, uniformization of plasma under reduced pressure. That is, there were problems where the cost increases due the provision of vacuum system, which is required to bring the container with powder stored therein into reduced pressure, and the throughput of the powder treatment is limited because successive introduction of the powder to be treated and successive taking out of the powder after treatment are very difficult to perform.

### CITATION LIST

### Non-Patent Literature

Non-Patent Literature 1: Annual Report 2001, Technical Report, Oita Industrial Science and Technology Center, 120
Non-Patent Literature 2: http://www.nichiha.co.jp/wall/microguard/chosinsui.html

### Patent Literature

Patent Literature 1: JP 2014-157760 A
Further Patent Literature: WO 2008/014607 A1, US 2003/157000 A1

### SUMMARY

### Technical Problem

In view of the aforementioned circumstances, it is an object of the present invention to provide an apparatus and method for powder treatment in atmospheric pressure, which enables successive introduction of powder and free adjustment of the plasma treating time when powder is hydrophilized with plasma treatment, and successive taking out of powder when the treatment is ended.

### Solution to Problem

The problem is solved by an apparatus and a method according to the independent claims.

First embodiment of the present invention to achieve the above object is a powder treatment apparatus According to claim 1

Second embodiment of the present invention is a powder treatment apparatus according to claim 2.

Third embodiment of the present invention is a powder treatment apparatus according to the second embodiment, wherein the flow-path-forming cylindrical pipe is provided radially inside of the cylindrical base body, both ends in the axial direction of the flow path between the cylindrical base body and the flow-path-forming cylindrical pipe are sealed, the powder transferring unit introduces the powder along with the carrier gas from a gas inlet port provided at a certain position in the circumferential direction on one side in the axial direction of the flow path, and the collecting unit collects the treated powder from the gas exhausted from a gas outlet port provide at a certain position in the circumferential direction on the other side in the axial direction of the flow path.

Fourth embodiment of the present invention is a powder treatment apparatus according to the third embodiment, wherein an outlet flow path pipe is arranged radially inside of the flow-path-forming cylindrical pipe, the other end in the axial direction of the flow path communicates with one end of the outlet flow path pipe, and the collecting unit collects the treated powder from the gas exhausted from the other end of the outlet flow path pipe located on one end side of the flow-path-forming cylindrical pipe.

Fifth embodiment of the present invention is a powder treatment apparatus according to any one of the first to fourth embodiments, wherein the cylindrical base body is arranged to have the axial direction coinciding with the direction of gravity, the powder transferring unit is configured to introduce the powder from a lower side in the direction of gravity, and the collecting unit is configured to collect the treated powder from an upper side in the direction of gravity.

Sixth embodiment of the present invention is a powder treatment apparatus according to any one of the first to fourth embodiments, wherein the cylindrical base body is arranged to have the axial direction coinciding with the direction of gravity, the powder transferring unit is configured to introduce the powder from an upper side in the direction of gravity, and the collecting unit is configured to collect the treated powder from a lower side in the direction of gravity.

Seventh embodiment of the present invention is a powder treatment apparatus according to any one of the first to sixth embodiments, wherein the cylindrical base body and the powder transferring unit are connected by an inlet pipe, and the inlet pipe extends to substantially coincide with the tangential direction of an inner wall of the cylindrical base body.

Eighth embodiment of the present invention is a powder treatment apparatus according to any one of the first to seventh embodiments, wherein the carrier gas is one selected from the group consisting of argon, helium, air, nitrogen, oxygen, and chlorine, or a mixed gas of them.

Ninth embodiment of the present invention is a method for treating powder according to claim 9.

Tenth embodiment of the present invention is a method according to claim 10.

Eleventh embodiment of the present invention is a method for treating powder according to Claim 11.

Twelfth embodiment of the present invention is a method for treating powder according to any one of the ninth to eleventh embodiments, wherein the introduction of the carrier gas and the powder into the cylindrical base body is made to have the inflow direction substantially coinciding with the tangential direction of an inner wall of the cylindrical base body.

### BRIEF DESCRIPTION OF THE DRAWINGS

Fig. 1A is a schematic view of the construction of a powder treating apparatus with plasma showing Embodiment 1 of the present invention.
Fig. 1B is a schematic view of the construction of a powder treating apparatus with plasma showing Embodiment 1 of the present invention.
Fig. 2A is a schematic view of the construction of a powder treating apparatus with plasma showing Embodiment 2 of the present invention.
Fig. 2B is a schematic view of the construction of a powder treating apparatus with plasma showing Embodiment 2 of the present invention.
Fig. 3 is a schematic view of the construction of a powder treating apparatus with plasma showing Embodiment 3 of the present invention.
Fig. 4A is a schematic view of the construction of a powder treating apparatus with plasma showing another embodiment of the present invention with a position of an inlet pipe changed.
Fig. 4B is a schematic view of the construction of a powder treating apparatus with plasma showing still another embodiment of the present invention with the position of an inlet pipe changed.
Fig. 5 is an estimation result of water dispersibility of powder subjected to plasma treatment in Embodiment 1 of the present invention.

### DESCRIPTION OF EMBODIMENTS

Hereinafter, the present invention will be described in detail.

### (Embodiment 1)

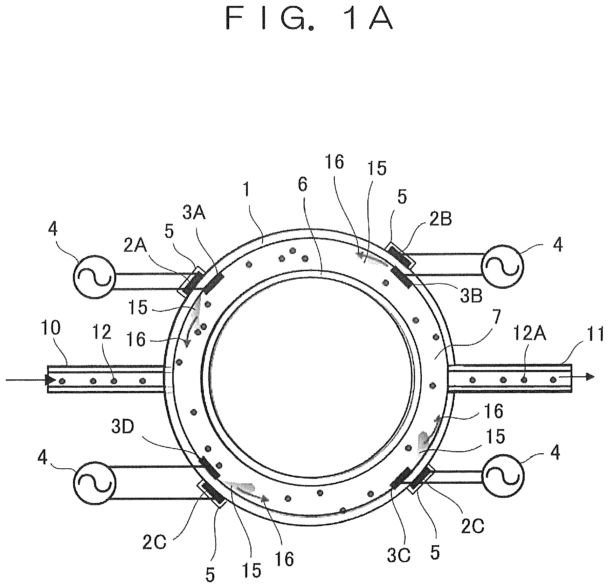

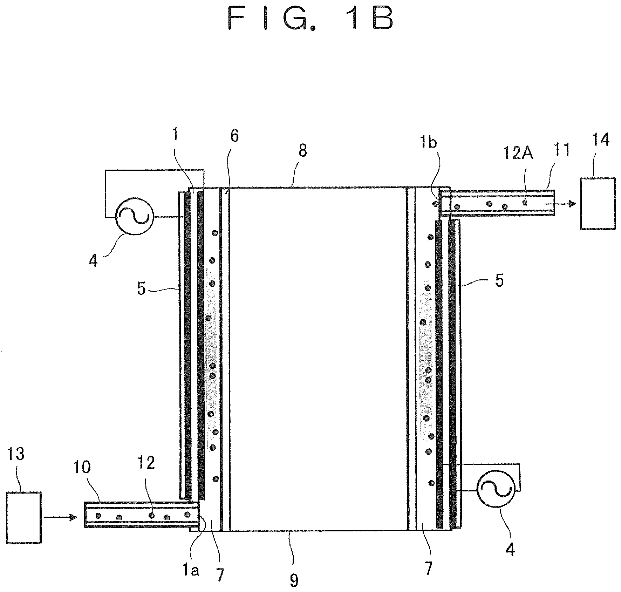

Figs. 1A and 1B show a cross sectional view and a longitudinal sectional view both showing a schematic construction of a powder treating apparatus of Embodiment 1 of the present invention. As shown in these figures, a plurality of outer electrodes 2A to 2D and a plurality of inner electrodes 3A to 3D are arranged radially outside and radially inside of a cylindrical base body 1.

The plurality of outer electrodes 2A to 2D and the plurality of inner electrodes 3A to 3D are made of, for example, copper plate, and arranged evenly in the circumferential direction around the cylindrical base body 1 to form four pairs of opposite electrodes. Each corresponding pair of the plurality of outer electrodes 2A to 2D and the plurality of inner electrodes 3A to 3D are arranged to be partly opposed to each other with the cylindrical base body 1 therebetween while being displaced from each other in the circumferential direction. The plurality of outer electrodes 2A to 2D and the plurality of inner electrodes 3A to 3D have a strip shape extending in the axial direction and all of the electrodes have the same shape. The electrodes are held in such a position that they are partly opposite to each other while not being partly opposite to each other in the width direction corresponding to the circumferential direction.

The outer electrodes 2A to 2D and the inner electrodes 3A to 3D forming the four pairs of opposite electrodes are respectively connected to high frequency power sources 4 so that a high frequency voltage can be applied between the outer electrodes 2A to 2D and the inner electrodes 3A to 3D forming the four pairs of opposite electrodes. The outer electrodes 2A to 2D may be connected, for example, at their ends, and the inner electrodes 3A to 3D may be connected, for example, at their ends, so that a high frequency voltage can be applied to the outer electrodes 2A to 2D and the inner electrodes 3A to 3D forming the four pairs of opposite electrodes by one high frequency power source 4.

A dielectric layer 5 is provided to cover the surface of each of the outer electrodes 2A to 2D. The dielectric layer 5 may be provided by adhering a tape-type dielectric conductor or by coating a dielectric material.

In this embodiment, a flow-path-forming cylindrical pipe 6 is provided radially inside of the cylindrical base body 1 to be disposed at a certain distance apart from the cylindrical base body 1, and concentrical with the same. The flow-path-forming cylindrical pipe 6 is configured to form a flow path 7 between itself and the cylindrical base body 1. The cylindrical base body 1 and the flow-path-forming cylindrical pipe 6 are configured to be raised with their axial direction extending along the vertical direction, and upper end openings and lower end openings of the cylindrical base body 1 and the flow-path-forming cylindrical pipe 6 are sealed by rid members 8 and 9. A flow path 7 having an annular ring shape is thereby formed in proximity to an inner wall of the cylindrical base body 1.

A gas inlet port 1a is provided at a certain position in the circumferential direction on a lower part of the cylindrical base body 1, and a gas inlet pipe 10 as an inlet pipe is connected to the gas inlet port 1a. On the other hand, a gas outlet port 1b is provided at a position of an upper part of the cylindrical base body 1 on a side radially opposite to the certain position in the circumferential direction, and a gas outlet pipe 11 is connected to the gas outlet port 1b.

The gas inlet pipe 10 is connected to a powder transferring unit 13 that introduces thereinto a gas, which is a carrier gas serving as a carrier such as argon, helium, air, or the like, and simultaneously introduces thereinto the powder to be treated 12. On the other hand, the gas outlet port 11 is connected to a collecting unit 14 that collects the treated powder 12A, which is the powder to be treated 12 with the surface treated.

In the present invention, the inflow gas effectively works as a carrier serving as the gas transfer of the powder to be treated 12, and argon or helium is preferably employed. When molecules such as air, oxygen, and water vapor containing oxygen are employed as the carrier, a powder surface can be effectively oxidized with plasma, which leads to enhancement of the hydrophilization speed. When a gas containing nitrogen is contained, it nitrides the powder surface, and thus, the high hardness resulting from the nitriding can be expected, for example, in metal fine particles. When chlorine is employed as the carrier gas, it develops etching of the powder surface to thereby enable to obtain powder having a finer particle diameter. This effect can be produced not only by flowing one of the above gasses solely, but also by flowing the gasses in any combination.

When the powder treatment method is to be performed using such an apparatus, the powder to be treated 12 may be introduced along with the carrier gas from the gas inlet pipe 10 that communicates with a lower end of the flow path 7, while the high frequency voltage is applied to the plurality of outer electrodes 2A to 2D and the plurality of inner electrodes 3A to 3D.

When the high frequency voltage is applied to the plurality of outer electrodes 2A to 2D and the plurality of inner electrodes 3A to 3D, an electric discharge at the outer electrodes 2A to 2D radially outside is prevented by the dielectric layer 5 covering the outer electrodes 2A to 2D, and a dielectric barrier discharge occurs around the inner electrodes 3A to 3D radially inside of the cylindrical base body 1. Here, local plasma occurs at the ends of the inner electrodes 3A to 3D opposed to the outer electrodes 2A to 2D because the outer electrodes 2A to 2D and the inner electrodes 3A to 3D are arranged to be partly opposed to each other with the cylindrical base body 1 therebetween while being displaced from each other in the circumferential direction. The density of plasma 15 at this moment is biased to the direction opposite to the inner electrodes 3A to 3D from an inner surface of the cylindrical base body 1 on the radially inner side. Then, a rotating air flow 16 is generated in the flow path 7 due to the bias of the density of the plasma 15. The rotation of the rotating air flow 16 is in the counterclockwise direction in Fig. 1A. Accordingly, under this state, the powder to be treated 12 introduced along with the carrier gas from the gas inlet pipe 10 that communicates with the lower end of the flow path 7 is subjected to the plasma treatment while being in contact with the plasma 15, is upwardly transferred while being rotated by the rotating air flow 16 in the counterclockwise direction, and is then discharged from the gas outlet pipe 11 as the treated powder 12A.

In the present invention, the plurality of outer electrodes 2A to 2D and the plurality of inner electrodes 3A to 3D will be called as plasma actuators because the electrodes are arranged to be partly opposed to each other with the cylindrical base body 1 therebetween while being displaced from each other in the circumferential direction, to thereby produce the biased plasma 15 and generate the rotating air flow 16. Such a plurality of plasma actuators are preferably equiangularly arranged around the center axis of the cylindrical base body 1. The powder to be treated 12 is transferred by the rotating air flow 16 to expose to the plasma 15. With the configuration where the plurality of plasma actuators are arranged, one powder to be treated 12 is irradiated by the plasma 15 many times until it is discharged so that high surface treatment efficiency can be achieved compared with the irradiation only one time. Further, with the configuration where the plasma actuators are equiangularly arranged, the rotating air flow 16 can be uniformly generated in the flow path 7 between the double cylindrical pipes.

In this method, the time during which the powder to be treated 12 is exposed to the plasma 15 depends on the gas flow rate supplied from the gas inlet pipe 10. Accordingly, when the flow rate is lower, the ascent rate of the powder to be treated 12 in the flow path 7 between the double cylindrical pipes is lower, which enables to prolong substantially a plasma treating time. When the flow rate is higher, the plasma treating time can be shortened. It is thus possible to relatively easily change the plasma treating time, that is, the extent of plasma treatment.

In this method, if the mass of powder varies, excessively heavy particles are not floated by an upward current of spiral flow and accumulate on the bottom of the double cylindrical pipes, while only the relatively light particles can be floated. Eventually, it is possible to take out the light particles only. That is, this apparatus can be utilized as the classification device. The floating conditions depend on the weight and the flow rate of the powder, and it is thus possible to set the mass to be classified by appropriately setting the flow rate of the carrier gas.

In this apparatus, the flow-path-forming cylindrical pipe 6 is provided to form the double cylindrical pipes with an attempt to produce the plasma 15 in the flow path 7 of the double cylindrical pipes, through which the powder to be treated 12 is transferred, and to thereby effectively contact the powder to be treated 12 with the plasma 15. In this method, the flow path 7 for the powder to be treated 12 is held in the atmospheric pressure, and a plasma area of the plasma 15 produced in this case is limited to a range about 5 mm to 1 cm around electrodes. Therefore, the distance between the cylindrical base body 1 and the flow-path-forming cylindrical pipe 6 of the double cylindrical pipes is preferably reduced to 1 cm or less within the range where the plasma 15 is produced to thereby effectively expose the powder to be treated 12 to the plasma 15.

The inner electrodes 3A to 3D arranged on the cylindrical base body 1 may be covered by the dielectric layer in order to provide the flow-path-forming cylindrical pipe 6 radially outside of the cylindrical base body 1. Further, the flow-path-forming cylindrical pipe 6 may be provided with electrodes for producing the local plasma in addition to the outer electrodes 2A to 2D and the inner electrodes 3A to 3D.

### (Embodiment 2)

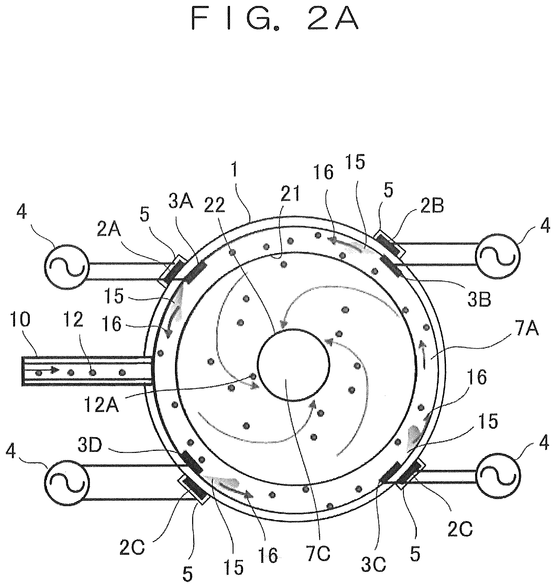

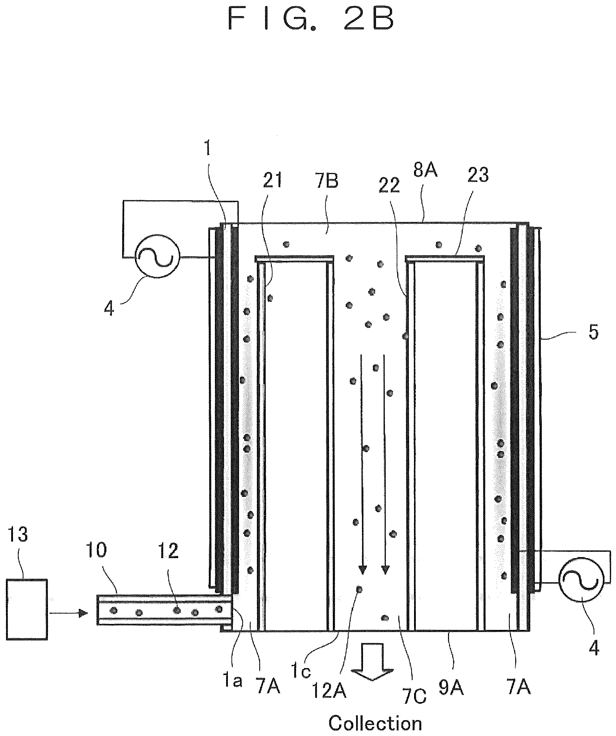

Figs. 2A and 2B show a cross sectional view and a longitudinal sectional view both showing a schematic construction of a powder treating apparatus of Embodiment 2 of the present invention.

As shown in Figs. 2A and 2B, this apparatus has a triple-pipes configuration, in which a flow-path-forming cylindrical pipe 21 and a flow-path-forming cylindrical pipe 22 that serves as the outlet flow path pipe are provided radially inside of the cylindrical base body 1 and concentrical with the same. Members or parts having the same functions as those in Embodiment 1 will be allocated with the same reference numerals, and the redundant explanation will be omitted.

A rid member 8A that seals an upper end of the cylindrical base body 1 seals only the cylindrical base body 1. Upper ends of the flow-path-forming cylindrical pipes 21 and 22 provided radially inside of the cylindrical base body 1 are located away from the rid member 8A. The space between the flow-path-forming cylindrical pipes 21 and 22 is sealed with a rid member 23. On the other hand, the lower ends of the cylindrical base body 1 and the flow-path-forming cylindrical pipes 21 and 22 are sealed by a rid member 9A having an opening at the area corresponding to the lower-end opening of the flow-path-forming cylindrical pipe 22, and the opening serves as a gas outlet port 1c. In this configuration, a flow path 7A is provided between the cylindrical base body 1 and the flow-path-forming cylindrical pipe 21 in the same manner as Embodiment 1. The flow path 7A communicates with a flow path 7B having a disc shape and located at the upper end of the cylindrical base body 1. The disc-shaped flow path 7B communicates with a flow path 7C, of which a center is provided radially inside of the flow-path-forming cylindrical pipe 22. The flow path 7C communicates with the gas outlet port 1c.

When the powder treatment method is to be performed using such an apparatus, the powder to be treated 12 may be introduced along with the carrier gas from the gas inlet pipe 10 that communicates with a lower end of the flow path 7A, while the high frequency voltage is applied to the plurality of outer electrodes 2A to 2D and the plurality of inner electrodes 3A to 3D.

When the high frequency voltage is applied to the plurality of outer electrodes 2A to 2D and the plurality of inner electrodes 3A to 3D, an electric discharge at the outer electrodes 2A to 2D on the radially outside of the cylindrical base body 1 is prevented by the dielectric layer 5 covering the outer electrodes 2A to 2D, and a dielectric barrier discharge occurs around the inner electrodes 3A to 3D on the radially inside of the cylindrical base body 1, in the same manner as Embodiment 1. Accordingly, a rotating air flow 16 is generated in the flow path 7A due to the bias of the density of the plasma 15 in the same manner as Embodiment 1. The rotating air flow is rotated in the counterclockwise direction when viewed from above, as shown in Fig. 2A. Under this state, the powder to be treated 12 introduced along with the carrier gas from the gas inlet pipe 10 that communicates with the lower end of the flow path 7A is subjected to the plasma treatment while being in contact with the plasma 15, is upwardly transferred while being rotated by the rotating air flow 16 in the counterclockwise direction, and then enters the disc-shaped flow path 7B. Flows within the flow path 7B as a whole turn to be a rotating air flow in the counterclockwise direction, and the powder subjected to the plasma treatment falls through the flow path 7C at the center to be discharged as the treated powder 12A from the gas outlet port 1c.

The plasma treatment in this apparatus is performed in the same manner as Embodiment 1. This apparatus can be also utilized as the classification device. The flow-path-forming cylindrical pipe 21 may be provided radially outside of the cylindrical base body 1 to form a triple-pipes configuration. In this embodiment, electrodes may be arranged radially inside and radially outside of the flow-path-forming cylindrical pipe 22 to produce plasma in the flow path 7C so that the plasma treatment is performed when fine particles falls and are collected.

According to this embodiment, the outlet of the treated powder 12A is arranged at the lower part of the apparatus so that the treated powder 12A is successively transferred to the lower part by the gravity, which produce an effect of providing easy connection with a device for collecting the treated powder 12A, a device for classification, a device for pulverization, or the like.

This apparatus may be configured to include the gas inlet pipe 10 at the upper part of the cylindrical base body 1 and include the flow path 7B having the disc shape at the lower end of the cylindrical base body 1 to collect the treated powder 12A from an upper part of the flow-path-forming cylindrical pipe 23 that serves as the outlet flow path pipe.

### (Embodiment 3)

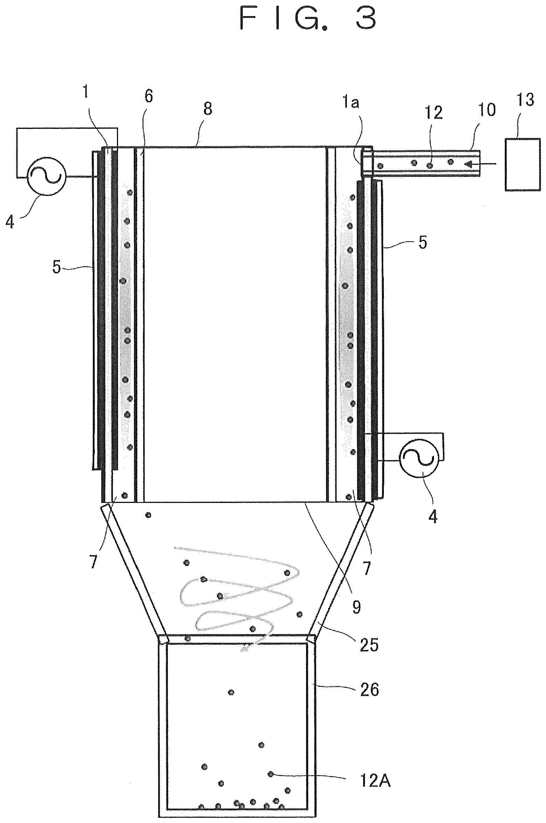

Fig. 3 shows a cross sectional view and a longitudinal sectional view showing a schematic construction of a powder treating apparatus of Embodiment 3 of the present invention.

As shown in Fig. 3, the apparatus has the same configuration as Embodiment 1 except that a gas inlet port 1a is provided at the upper end of the cylindrical base body 1, to which a gas inlet pipe 10 is connected, and a collecting container 26 is connected to the lower end of the cylindrical base body 1 through a guide member 25. Members or parts having the same functions as those in Embodiment 1 will be allocated with the same reference numerals, and the redundant explanation will be omitted.

When the powder treatment method is to be performed using such an apparatus, the powder to be treated 12 may be introduced along with the carrier gas from the gas inlet pipe 10 that communicates with the upper end of the flow path 7, while the high frequency voltage is applied to the plurality of outer electrodes 2A to 2D and the plurality of inner electrodes 3A to 3D. The powder to be treated 12 is thereby subjected to the plasma treatment, while circling in the counterclockwise direction and falling in the flow path 7. In this case, the treated powder 12A is made to free-fall down to the bottom and stored in the collecting container 26 through the guide member 25. In this method, although the effect of classification is lost, there is an advantage in that the treated powder 12 A is easily collected because it is made to free-fall and automatically collected in the collecting container 26.

In the present invention, the plurality of plasma actuators are preferably equiangularly arranged around the axis of the cylindrical pipe. The powder is transferred by the rotating air flow to expose to the plasma. With this configuration where the plurality of plasma actuators are arranged, one powder is irradiated by the plasma many times until it is discharged so that high surface treatment efficiency can be achieved compared with the irradiation only one time. Further, with the configuration where the plasma actuators are equiangularly arranged, the rotating air flow can be uniformly generated in the double cylindrical pipes.

In the present invention, the inflow gas effectively works as a carrier serving as the gas transfer of the powder, and argon or helium is preferably employed. When molecules such as air, oxygen, and water vapor containing oxygen are employed as the carrier, a powder surface can be effectively oxidized with plasma, which leads to enhancement of the hydrophilization speed. When a gas containing nitrogen is contained, it nitrides the powder surface, and thus, the high hardness resulting from the nitriding can be expected, for example, in metal fine particles. When chlorine is employed as the carrier gas, it develops etching of the powder surface to thereby enable to obtain powder having a finer particle diameter. This effect can be produced not only by flowing one of the above gasses solely, but also by flowing the gasses in any combination.

In the aforementioned embodiment, the powder to be treated 12 introduced along with the carrier gas is introduced by providing the flow path between the cylindrical base body 1 and the flow-path-forming cylindrical pipe 6 or 21. However, it is not necessarily required to provide the flow-path-forming cylindrical pipe 6 or 21 if it is possible to employ an introducing method, for example, in which the powder to be treated 12 flows along with the carrier gas only near the inner surface of the cylindrical base body 1.

However, when the apparatus is provided with only the cylindrical base body 1 to have a single cylindrical pipe configuration, without providing the flow-path-forming cylindrical pipe 6 or 21, it would be highly likely that, although the effect of the plasma treatment is produced, it is insufficient in terms of the uniformity, because the air flow accumulation occurs around the center of the cylinder to cause the accumulation of the powder that is insufficiently subjected to the plasma treatment.

In the aforementioned embodiment, the cylindrical base body 1 or the like is arranged to have the axial direction corresponding to the gravity direction, but may be arranged to have the axial direction corresponding to, for example, the horizontal direction, or the direction inclined from the horizontal direction or the gravity direction.

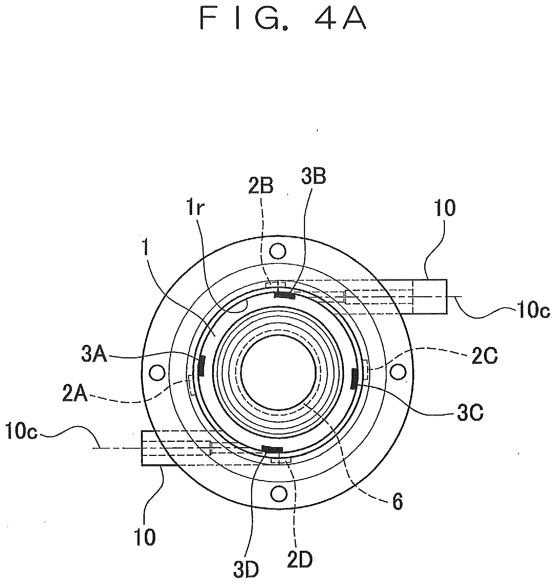

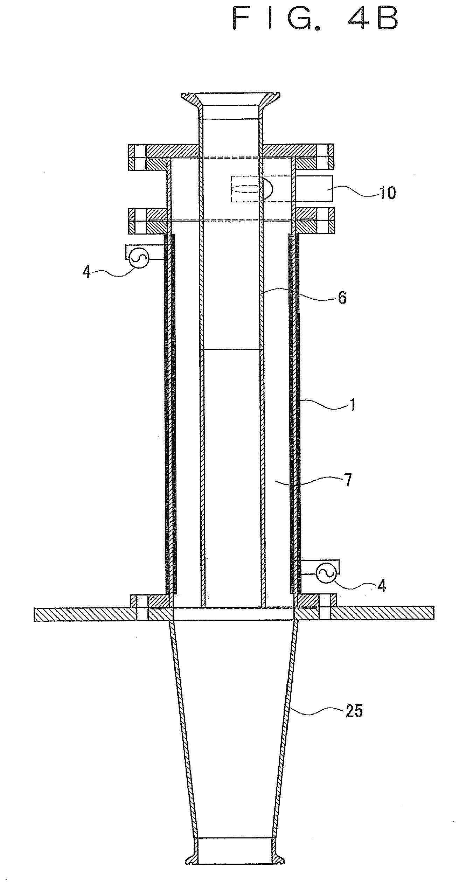

As shown in Fig. 4A and Fig. 4B, the inlet pipe (gas inlet pipe) 10 that connects the cylindrical base body 1 and the powder transferring unit 13 (see Fig. 1B and Fig. 2B) may be configured to have an axial centerline 10c extending to substantially coincide with the tangential direction of an inner wall lr of the cylindrical base body 1 (more specifically, extending to be parallel to the tangential direction). The dielectric layer 5 and the powder to be treated 12 are not shown in Fig. 4A and Fig. 4B.

With this configuration, the gas and the powder to be treated 12 (not shown in Fig. 4A and Fig. 4B) are made to flow into the cylindrical base body 1 such that the inflow direction substantially coincide with the tangential direction of the inner wall lr of the cylindrical base body 1. Therefore, it is possible to successively introduce the gas and the powder to be treated 12 into the cylindrical base body 1 with a low resistance compared with the configuration where the axial centerline of the gas inlet pipe 10 is orthogonal to the inner wall of the cylindrical base body 1 as shown in Fig. 1A and Fig. 2A. Accordingly, the power of the powder transferring unit 13 can be lowered. It is also possible to introduce the gas and the powder to be treated 12 from the gas inlet pipe 10 toward the direction substantially the same as that of the rotating air flow 16 (see Fig. 1A and Fig. 2A) generated by the plasma in the flow path 7, so that the powder to be treated 12 can stably contact the plasma without disturbance of the rotating air flow 16 to thereby enable to obtain the treated powder 12A that is uniform and stable in quality.

In this embodiment, two gas inlet pipes 10 are arranged in a rotational symmetry and extend in the opposite directions as shown in Fig. 4A. However, without limitation to this, one gas inlet pipe 10 may be provided as shown in Fig. 2A, and three or more gas inlet pipe 10 may be provided. Alternatively, a plurality of gas inlet pipes 10 may be provided on each of the upper side and the lower side. Further, the gas outlet pipe 11 extending in the direction opposite to the gas inlet pipe 10 may be provided as shown in Fig. 1A.

In this embodiment, the part in which the gas inlet pipe 10 is provided and the other part of the cylindrical base body 1 are upper and lower separate parts which are flange-connected, as shown in Fig. 4B. However, without limitation to this, these upper part and lower part may be integrally formed. Also in this embodiment, the guide member 25 that can be connected to the collecting container or the like (not shown) is provided as shown in Fig. 3, but there is no limitation to this.

According to the aforementioned embodiments, it is possible to control the wettability and the hydrophobicity of the powder because the powder can be efficiently subjected to the plasma treatment, and the plasma treating time can be easily set and adjusted. Further, when the above treatment is performed, it is possible to produce the effects that a vacuum exhaust device is not necessary, the cost therefor can be reduced, the powder can be successively introduced into the treatment apparatus, the powder can be automatically collected, and the time for treating the powder can be shortened.

### (Example 1)

In the present invention, tests were performed, in which nylon resin fine particles having an average particle diameter of 30 µm were subjected to the plasma treatment using each of the apparatuses shown in Figs. 1A and 1B, Figs. 2A and 2B, and Fig. 3. The carrier gas used this time was helium, and the introducing amount was 50 L/min. The double cylindrical pipes were used, in which the inner pipe had an outer diameter of 80 mm, the outer pipe had an outer diameter of 100 mm, and each length was 100 mm. Each thickness of the cylindrical pipes was 3 mm and formed of an acrylic material. The plasma actuators were arranged on the four sides relative to the center axis of the pipes. The length of one actuator was 100 mm, the width thereof on the inner pipe side was 15 mm, and the width thereof on the outer pipe side was 15 mm. The material of the electrodes was copper foil with a thickness of 50 µm. As to the application of the voltage, the electrodes on the outer pipe side were served as the grounds, and a voltage of 13 kV with a frequency of 15 kHz was applied to the electrodes on the inner pipe side. The treating time from the introduction to the collection of the powder was about 15 seconds.

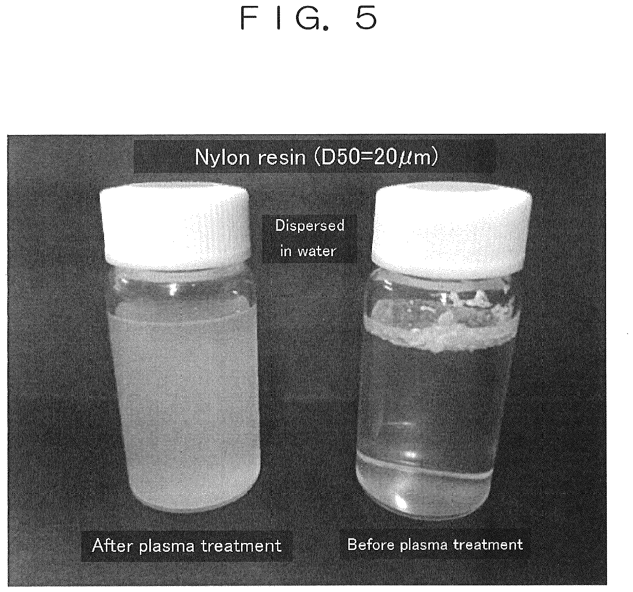

For evaluation of the hydrophilicity and the hydrophobicity of the treated powder, the powder was stirred into pure water and evaluated whether it was dispersed or not. As shown in Fig. 5, it is found that the powder before the plasma treatment is completely hydrophobic, floats on the water surface, and hence is aggregated. On the other hand, it is found that the powder after the plasma treatment was dispersed into water and caused water to be clouded. The tests on the powders treated using three types of the apparatus shown in Figs. 1A and 1B, Figs. 2A and 2B, and Fig. 3 showed the same result.

The above effect indicates that hydrocarbons on the surface of nylon resin was oxidized to form a hydroxyl group on the surface, and then changed from hydrophobic to hydrophilic. This effect is utilized in enabling the hydrophobic powder to have a water dispersible effect and accordingly turn to be a water soluble paste. Turning the powder into the water soluble paste produces effects to prevent the charge of the static electricity to thereby make painting easy as an aqueous ink.

### Industrial Applicability

Examples of the field to which the present invention is applied include the control of the wettability and the hydrophobicity of the powder, the water soluble paste containing the powder, and the water purification process.

### REFERENCE SIGNS LIST

1: Cylindrical base body
1a: Gas inlet port
1b, 1c: Gas outlet port
1r: Inner wall of cylindrical base body
2A-2D: Outer electrode
3A-3D: Inner electrode
4: High frequency power source
5: Dielectric layer
6, 21, 22: Flow-path-forming cylindrical pipe
7, 7A-7C: Flow path
8, 8A, 9, 9A: Rid member
10: Inlet pipe, gas inlet pipe
10c: Axial centerline of inlet pipe (gas inlet pipe)
11: Gas outlet pipe
12: Powder to be treated
12A: Treated powder
13: Powder transferring unit
14: Collecting unit
15: Plasma
16: Rotating air flow

## Claims

1. A powder treatment apparatus for plasma treatment of a powder, **characterized in that** the apparatus comprises:
a cylindrical base body;
outer electrodes and inner electrodes that are arranged radially outside and radially inside of the cylindrical base body to be partly opposed to each other with the cylindrical base body therebetween, while being displaced from each other in the circumferential direction, and arranged at intervals from each other in the circumferential direction while extending along the axial direction;
a dielectric layer that covers the outer electrodes;
one or a plurality of high frequency power sources that apply a high frequency voltage between the outer electrodes and the inner electrodes adjacent to each other;
a powder transferring unit that introduces the powder along with a carrier gas toward the radially inside of the cylindrical base body from one end side to the other end side in the axial direction along an inner wall of the cylindrical base body; and
a collecting unit that collects treated powder that is introduced from the powder transferring unit and subjected to surface treatment,
wherein the high frequency voltage is applied between the outer electrodes and the inner electrodes by the high frequency power source to produce plasma near the inner electrodes to contact the powder with plasma, and the treated powder subjected to the surface treatment with plasma is collected at the collecting unit.

2. The powder treatment apparatus according to Claim 1, wherein the apparatus further comprises
a flow-path-forming cylindrical pipe that is provided on one side radially opposite to the other side of the cylindrical base body to be close to the cylindrical base body, the dielectric layer being provided on the other side,
wherein a flow path having an annular ring shape is formed between the flow-path-forming cylindrical pipe and the cylindrical base body, and
the powder transferring unit introduces the powder along with a carrier gas through the flow path between the cylindrical base body and the flow-path-forming cylindrical pipe from one end side to the other end side in the axial direction.

3. The powder treatment apparatus according to Claim 2, wherein
the flow-path-forming cylindrical pipe is provided radially inside of the cylindrical base body,
both ends in the axial direction of the flow path between the cylindrical base body and the flow-path-forming cylindrical pipe are sealed,
the powder transferring unit introduces the powder along with the carrier gas from a gas inlet port provided at a certain position in the circumferential direction on one side in the axial direction of the flow path, and
the collecting unit collects the treated powder from the gas exhausted from a gas outlet port provide at a certain position in the circumferential direction on the other side in the axial direction of the flow path.

4. The powder treatment apparatus according to Claim 3, wherein
an outlet flow path pipe is arranged radially inside of the flow-path-forming cylindrical pipe,
the other end in the axial direction of the flow path communicates with one end of the outlet flow path pipe, and
the collecting unit collects the treated powder from the gas exhausted from the other end of the outlet flow path pipe located on one end side of the flow-path-forming cylindrical pipe.

5. The powder treatment apparatus according to any one of Claims 1 to 4, wherein
the cylindrical base body is arranged to have the axial direction coinciding with the direction of gravity,
the powder transferring unit is configured to introduce the powder from a lower side in the direction of gravity, and
the collecting unit is configured to collect the treated powder from an upper side in the direction of gravity.

6. The powder treatment apparatus according to any one of Claims 1 to 4, wherein
the cylindrical base body is arranged to have the axial direction coinciding with the direction of gravity,
the powder transferring unit is configured to introduce the powder from an upper side in the direction of gravity, and
the collecting unit is configured to collect the treated powder from a lower side in the direction of gravity.

7. The powder treatment apparatus according to any one of Claims 1 to 6, wherein
the cylindrical base body and the powder transferring unit are connected by an inlet pipe, and
the inlet pipe extends to substantially coincide with the tangential direction of an inner wall of the cylindrical base body.

8. The powder treatment apparatus according to any one of Claims 1 to 7, wherein the carrier gas is one selected from the group consisting of argon, helium, air, nitrogen, oxygen, and chlorine, or a mixed gas of them.

9. A method for treating a powder with plasma treatment, **characterized in that** the method comprises:
arranging outer electrodes and inner electrodes radially outside and radially inside of a cylindrical base body to be partly opposed to each other with the cylindrical base body therebetween, while displacing them from each other in the circumferential direction, at intervals from each other in the circumferential direction while extending along the axial direction of the cylindrical base body;
covering the outer electrodes by a dielectric layer;
applying a high frequency voltage between the outer electrodes and the inner electrodes adjacent to each other to thereby produce plasma near the inner electrodes;
introducing the powder along with a carrier gas from one end to the other end in the axial direction of the cylindrical base body;
performing a surface treatment of the powder by holding the powder in contact with plasma while transferring the powder; and
collecting treated powder from the other end of the cylindrical base body.

10. The method for treating powder according to Claim 9, wherein the method comprises:
forming a flow-path-forming cylindrical pipe on one side radially opposite to the other side of the cylindrical base body to be close to the cylindrical base body, the dielectric layer being provided on the other side, and forming a flow path having an annular ring shape between the flow-path-forming cylindrical pipe and the cylindrical base body;
applying a high frequency voltage between the outer electrodes and the inner electrodes adjacent to each other, while introducing the powder along with the carrier gas through the flow path between the cylindrical base body and the flow-path-forming cylindrical pipe from one end side to the other end side in the axial direction; and
producing plasma near the electrodes in the flow path to contact the powder with plasma, and collecting treated powder subjected to surface treatment with plasma.

11. The method for treating powder according to Claim 9 or 10 comprising:
introducing the powder while at the same time collecting the treated powder.

12. The method for treating powder according to any one of Claims 9 to 11, wherein the introduction of the carrier gas and the powder into the cylindrical base body is made to have the inflow direction substantially coinciding with the tangential direction of an inner wall of the cylindrical base body.

## Patentansprüche

1. Pulverbehandlungsvorrichtung zur Plasmabehandlung eines Pulvers, **dadurch gekennzeichnet, dass** die Vorrichtung aufweist:
einen zylindrischen Grundkörper;
äußere Elektroden und innere Elektroden, die radial außerhalb und radial innerhalb des zylindrischen Grundkörpers so angeordnet sind, dass sie teilweise einander gegenüberliegen, wobei der zylindrische Grundkörper dazwischenliegt, während sie in Umfangsrichtung zueinander versetzt und in der Umfangsrichtung in Abständen zueinander angeordnet sind, während sie sich entlang der Axialrichtung erstrecken;
eine dielektrische Schicht, die die äußeren Elektroden überdeckt;
eine oder mehrere Hochfrequenz-Energiequellen, die eine Hochfrequenzspannung zwischen den äußeren Elektroden und inneren Elektroden, die zueinander benachbart sind, anlegen;
eine Pulverbeförderungseinheit, die das Pulver zusammen mit einem Trägergas zum radial Inneren des zylindrischen Grundkörpers von einer Endseite zur anderen Endseite in der Axialrichtung entlang einer Innenwand des zylindrischen Grundkörpers einleitet; und
eine Sammeleinheit, die behandeltes Pulver auffängt, das von der Pulverbeförderungseinheit eingeleitet und einer Oberflächenbehandlung unterzogen wird,
wobei die Hochfrequenzspannung zwischen den äußeren Elektroden und inneren Elektroden durch die Hochfrequenz-Energiequelle angelegt wird, um Plasma nahe den inneren Elektroden zu bilden, um das Pulver mit Plasma in Berührung zu bringen, und das behandelte Pulver, das der Oberflächenbehandlung mit Plasma unterzogen wurde, an der Sammeleinheit aufgefangen wird.

2. Pulverbehandlungsvorrichtung nach Anspruch 1, wobei die Vorrichtung darüber hinaus aufweist:
ein strömungspfadbildendes zylindrisches Rohr, das an einer Seite radial gegenüberliegend zur anderen Seite des zylindrischen Grundkörpers so vorgesehen ist, dass es dem zylindrischen Grundkörper nahe ist, wobei die dielektrische Schicht auf der anderen Seite vorgesehen ist,
wobei ein Strömungspfad mit Kreisringform zwischen dem strömungspfadbildenden zylindrischen Rohr und dem zylindrischen Grundkörper gebildet ist, und
die Pulverbeförderungseinheit das Pulver zusammen mit einem Trägergas durch den Strömungspfad zwischen dem zylindrischen Grundkörper und dem strömungspfadbildenden zylindrischen Rohr von einer Endseite zur anderen Endseite in der Axialrichtung einleitet.

3. Pulverbehandlungsvorrichtung nach Anspruch 2, wobei
das strömungspfadbildende zylindrische Rohr radial innerhalb des zylindrischen Grundkörpers vorgesehen ist,
beide Enden in der Axialrichtung des Strömungspfads zwischen dem zylindrischen Grundkörper und dem strömungspfadbildenden zylindrischen Rohr dicht verschlossen sind,
die Pulverbeförderungseinheit das Pulver zusammen mit dem Trägergas von einem Gaseinlassanschluss her einleitet, der an einer bestimmten Position in der Umfangsrichtung auf einer Seite in der Axialrichtung des Strömungspfads vorgesehen ist, und
die Sammeleinheit das behandelte Pulver aus dem Gas auffängt, das von einem Gasauslassanschluss ausgestoßen wird, der an einer bestimmten Position in der Umfangsrichtung auf der anderen Seite in der Axialrichtung des Strömungspfads vorgesehen ist.

4. Pulverbehandlungsvorrichtung nach Anspruch 3, wobei
ein Auslassströmungspfadrohr radial innerhalb des strömungspfadbildenden zylindrischen Rohrs angeordnet ist,
das andere Ende in der Axialrichtung des Strömungspfads mit einem Ende des Auslassströmungspfadrohrs in Verbindung ist, und
die Sammeleinheit das behandelte Pulver aus dem Gas auffängt, das vom anderen Ende des Auslassströmungspfadrohrs ausgestoßen wird, das sich an einer Endseite des strömungspfadbildenden zylindrischen Rohrs befindet.

5. Pulverbehandlungsvorrichtung nach einem der Ansprüche 1 bis 4, wobei
der zylindrische Grundkörper so angeordnet ist, dass seine Axialrichtung mit der Schwerkraftrichtung übereinstimmt,
die Pulverbeförderungseinheit dazu ausgelegt ist, das Pulver von einer in der Schwerkraftrichtung unteren Seite her einzuleiten, und
die Sammeleinheit dazu ausgelegt ist, das behandelte Pulver von einer in der Schwerkraftrichtung oberen Seite her aufzufangen.

6. Pulverbehandlungsvorrichtung nach einem der Ansprüche 1 bis 4, wobei
der zylindrische Grundkörper so angeordnet ist, dass seine Axialrichtung mit der Schwerkraftrichtung übereinstimmt,
die Pulverbeförderungseinheit dazu ausgelegt ist, das Pulver von einer in der Schwerkraftrichtung oberen Seite her einzuleiten, und
die Sammeleinheit dazu ausgelegt ist, das behandelte Pulver von einer in der Schwerkraftrichtung unteren Seite her aufzufangen.

7. Pulverbehandlungsvorrichtung nach einem der Ansprüche 1 bis 6, wobei
der zylindrische Grundkörper und die Pulverbeförderungseinheit über ein Einlassrohr verbunden sind, und
das Einlassrohr sich so erstreckt, dass es im Wesentlichen mit der Tangentialrichtung einer Innenwand des zylindrischen Grundkörpers übereinstimmt.

8. Pulverbehandlungsvorrichtung nach einem der Ansprüche 1 bis 7, wobei das Trägergas ein Gas ist, das ausgewählt ist aus der Gruppe bestehend aus Argon, Helium, Luft, Stickstoff, Sauerstoff und Chlor, oder ein Mischgas davon.

9. Verfahren zur Behandlung eines Pulvers mit einer Plasmabehandlung, **dadurch gekennzeichnet, dass** das Verfahren umfasst:
Anordnen von äußeren Elektroden und inneren Elektroden radial außerhalb und radial innerhalb eines zylindrischen Grundkörpers in der Weise, dass sie teilweise einander gegenüberliegen, wobei der zylindrische Grundkörper dazwischenliegt, während sie in Umfangsrichtung zueinander versetzt in Abständen zueinander in der Umfangsrichtung angeordnet werden, während sie sich entlang der Axialrichtung des zylindrischen Grundkörpers erstrecken;
Überdecken der äußeren Elektroden durch eine dielektrische Schicht;
Anlegen einer Hochfrequenzspannung zwischen den äußeren Elektroden und den inneren Elektroden, die zueinander benachbart sind, um dadurch Plasma nahe den inneren Elektroden zu erzeugen;
Einleiten des Pulver zusammen mit einem Trägergas von einem Ende zum anderen Ende in der Axialrichtung des zylindrischen Grundkörpers;
Durchführen einer Oberflächenbehandlung des Pulvers, indem das Pulver in Kontakt mit Plasma gehalten wird, während das Pulver befördert wird; und
Auffangen von behandeltem Pulver vom anderen Ende des zylindrischen Grundkörpers.

10. Verfahren zur Behandlung eines Pulvers nach Anspruch 9, wobei das Verfahren umfasst:
Bilden eines strömungspfadbildenden zylindrischen Rohrs auf einer Seite radial gegenüberliegend zur anderen Seite des zylindrischen Grundkörpers in der Weise, dass es dem zylindrischen Grundkörper nahe ist, wobei die dielektrische Schicht auf der anderen Seite vorgesehen ist, und Bilden eines Strömungspfads in Kreisringform zwischen dem strömungspfadbildenden zylindrischen Rohr und dem zylindrischen Grundkörper;
Anlegen einer Hochfrequenzspannung zwischen den äußeren Elektroden und den inneren Elektroden, die zueinander benachbart sind, während das Pulver zusammen mit dem Trägergas durch den Strömungspfad zwischen dem zylindrischen Grundkörper und dem strömungspfadbildenden zylindrischen Rohr von einer Endseite zur anderen Endseite in der Axialrichtung eingeleitet wird; und
Erzeugen von Plasma nahe den Elektroden im Strömungspfad, um das Pulver mit Plasma in Kontakt zu bringen, und Auffangen von behandeltem Pulver, das einer Oberflächenbehandlung mit Plasma unterzogen wurde.

11. Verfahren zur Behandlung eines Pulvers nach Anspruch 9 oder 10, umfassend:
Einleiten des Pulvers, während gleichzeitig das behandelte Pulver aufgefangen wird.

12. Verfahren zur Behandlung eines Pulvers nach einem der Ansprüche 9 bis 11, wobei das Einleiten des Trägergases und des Pulvers in den zylindrischen Grundkörper so erfolgt, dass die Einströmrichtung im Wesentlichen mit der Tangentialrichtung einer Innenwand des zylindrischen Grundkörpers übereinstimmt.

## Revendications

1. Dispositif de traitement de poudre pour traitement par plasma d'une poudre, **caractérisé en ce que** le dispositif comprend :
un corps de base cylindrique ;
des électrodes extérieures et des électrodes intérieures qui sont agencées à l'extérieur dans le plan radial et à l'intérieur dans le plan radial du corps de base cylindrique pour se trouver en partie à l'opposé les unes des autres avec le corps de base cylindrique entre, tout en étant déplacées les unes par rapport aux autres dans la direction circonférentielle, et agencées à intervalles donnés les unes par rapport aux autres dans la direction circonférentielle tout en s'étendant le long de la direction axiale ;
une couche diélectrique qui recouvre les électrodes extérieures ;
une ou une pluralité de sources d'alimentation en courant haute fréquence qui appliquent une tension de haute fréquence entre les électrodes extérieures et les électrodes intérieures placées côte à côte ;
une unité de transfert de poudre qui introduit la poudre conjointement avec un gaz porteur en direction de l'intérieur dans le plan radial du corps de base cylindrique d'un côté d'extrémité vers l'autre côté d'extrémité dans la direction axiale le long d'une paroi intérieure du corps de base cylindrique ; et
une unité de collecte qui collecte la poudre traitée qui est introduite depuis l'unité de transfert de poudre et est soumise au traitement de surface ;
dans lequel la tension haute fréquence est appliquée entre les électrodes extérieures et les électrodes intérieures par la source d'alimentation en courant haute fréquence pour produire du plasma à proximité des électrodes intérieures de façon à mettre en contact la poudre avec le plasma et dans lequel la poudre traitée soumise au traitement de surface au plasma est collectée au niveau de l'unité de collecte.

2. Dispositif de traitement de poudre selon la revendication 1, dans lequel le dispositif comprend en outre un tuyau cylindrique formant une voie d'écoulement qui est prévu sur un côté dans le plan radial opposé à l'autre côté du corps de base cylindrique de façon à être à proximité du corps de base cylindrique, la couche diélectrique étant prévue sur l'autre côté ;
dans lequel une voie d'écoulement ayant une forme annulaire est formée entre le tuyau cylindrique formant le chemin d'écoulement et le corps de base cylindrique ; et
l'unité de transfert de poudre introduit la poudre conjointement avec un gaz porteur à travers la voie d'écoulement entre le corps de base cylindrique et le tuyau cylindrique formant le chemin d'écoulement d'un côté d'extrémité vers l'autre côté d'extrémité dans la direction axiale.

3. Dispositif de traitement de poudre selon la revendication 2, dans lequel :
le tuyau cylindrique formant le chemin d'écoulement est prévu à l'intérieur dans le plan radial du corps de base cylindrique ;
deux extrémités dans la direction axiale de la voie d'écoulement entre le corps de base cylindrique et le tuyau cylindrique formant le chemin d'écoulement sont scellées ;
l'unité de transfert de poudre introduit la poudre conjointement avec le gaz porteur à partir d'un orifice d'admission de gaz prévu au niveau d'une certaine position dans la direction circonférentielle sur un côté dans la direction axiale de la voie d'écoulement et l'unité de collecte collecte la poudre traitée à partir du gaz s'échappant d'un orifice de sortie de gaz prévu dans une certaine position dans la direction circonférentielle sur l'autre côté dans la direction axiale de la voie d'écoulement.

4. Dispositif de traitement de poudre selon la revendication 3, dans lequel :
un tuyau de voie d'écoulement de sortie est agencé à l'intérieur dans le plan radial du tuyau cylindrique formant le chemin d'écoulement ;
l'autre extrémité dans la direction axiale de la voie d'écoulement communique avec une extrémité du tuyau de voie d'écoulement de sortie ; et
l'unité de collecte collecte la poudre traitée à partir du gaz s'échappant de l'autre extrémité du tuyau de voie d'écoulement de sortie positionné sur un côté d'extrémité du tuyau cylindrique formant le chemin d'écoulement.

5. Dispositif de traitement de poudre selon l'une quelconque des revendications 1 à 4, dans lequel :
le corps de base cylindrique est agencé pour que la direction axiale coïncide avec la direction de gravité ;
l'unité de transfert de poudre est configurée pour introduire la poudre depuis un côté inférieur dans la direction de gravité ; et
l'unité de collecte est configurée pour collecter la poudre traitée depuis un côté supérieur dans la direction de gravité.

6. Dispositif de traitement de poudre selon l'une quelconque des revendications 1 à 4, dans lequel :
le corps de base cylindrique est agencé pour que la direction axiale coïncide avec la direction de gravité ;
l'unité de transfert de poudre est configurée pour introduire la poudre depuis un côté supérieur dans la direction de gravité ; et
l'unité de collecte est configurée pour collecter la poudre traitée depuis un côté inférieur dans la direction de gravité.

7. Dispositif de traitement de poudre selon l'une quelconque des revendications 1 à 6, dans lequel :
le corps de base cylindrique et l'unité de transfert de poudre sont reliés par un tuyau d'admission ; et
le tuyau d'admission s'étend de façon à coïncider sensiblement avec le direction tangentielle d'une paroi intérieure du corps de base cylindrique.

8. Dispositif de traitement de poudre selon l'une quelconque des revendications 1 à 7, dans lequel le gaz porteur est sélectionné dans le groupe constitué par l'argon, l'hélium, l'air, le nitrogène, l'oxygène et le chlore ou un mélange de ces gaz.

9. Procédé de traitement d'une poudre avec un traitement par plasma, **caractérisé en ce que** le procédé comprend :
l'agencement d'électrodes extérieures et d'électrodes intérieures à l'extérieur dans le plan radial et à l'intérieur dans le plan radial d'un corps de base cylindrique pour se trouver en partie à l'opposé les unes des autres avec le corps de base cylindrique entre, tout en les déplaçant les unes par rapport aux autres dans la direction circonférentielle, à intervalles donnés les unes par rapport aux autres dans la direction circonférentielle tout en s'étendant le long de la direction axiale du corps de base cylindrique ;
le recouvrement des électrodes extérieures par une couche diélectrique ;
l'application d'une tension haute fréquence entre les électrodes extérieures et les électrodes intérieures placées côte à côte pour ainsi produire du plasma à proximité des électrodes intérieures ;
l'introduction de la poudre conjointement avec un gaz porteur d'une extrémité à l'autre extrémité dans la direction axiale du corps de base cylindrique ;
la réalisation d'un traitement de surface de la poudre en maintenant la poudre en contact avec le plasma tout en transférant la poudre ; et
la collecte de la poudre traitée depuis l'autre extrémité du corps de base cylindrique.

10. Procédé pour traiter la poudre selon la revendication 9, dans lequel le procédé comprend :
la formation d'un tuyau cylindrique formant le chemin d'écoulement sur un côté dans le plan radial opposé à l'autre côté du corps de base cylindrique pour être à proximité du corps de base cylindrique, la couche diélectrique étant prévue sur l'autre côté et la formation d'une voie d'écoulement ayant une forme annulaire entre le tuyau cylindrique formant le chemin d'écoulement et le corps de base cylindrique ;
l'application d'une tension haute fréquence entre les électrodes extérieures et les électrodes intérieures placées côte à côte, tout en introduisant la poudre conjointement avec le gaz porteur à travers la voie d'écoulement entre le corps de base cylindrique et le tuyau cylindrique formant le chemin d'écoulement d'un côté d'extrémité vers l'autre côté d'extrémité dans la direction axiale ; et
la production du plasma à proximité des électrodes dans la voie d'écoulement de façon à mettre en contact la poudre avec le plasma et la collecte de la poudre traitée soumise au traitement de surface au plasma.

11. Procédé pour traiter la poudre selon la revendication 9 ou comprenant :
l'introduction de la poudre en même temps que la poudre traitée est collectée.

12. Procédé de traitement de poudre selon l'une quelconque des revendications 9 à 11, dans lequel l'introduction du gaz porteur et de la poudre dans le corps de base cylindrique est réalisée pour que la direction d'écoulement entrant coïncide sensiblement avec la direction tangentielle d'une paroi intérieure du corps de base cylindrique.
